# EUROPÄISCHE PATENTSCHRIFT

(11) **EP 1 186 501 B1**
(45) Veröffentlichungstag und Bekanntmachung des Hinweises auf die Patenterteilung: **07.01.2004**
(21) Anmeldenummer: 01120113.4
(22) Anmeldetag: 21.08.2001
(51) Int. Cl.: B61D 27/00, B60H 1/00

(54) **Klimatisierungssystem für Fahrzeuge oder Flugzeuge**
Air conditioning system for vehicles and aircraft
Système d'air conditionné pour véhicules et avions

(30) Priorität: 05.09.2000 DE 10043733
(43) Veröffentlichungstag der Anmeldung: 13.03.2002
(73) Patentinhaber: Liebherr-Aerospace Lindenberg GmbH, 88161 Lindenberg/Allgäu (DE)
(72) Erfinder: Andrä, Robert, Dipl.-Ing. (FH), 88161 Lindenberg (DE); Sauter, Frank, Dipl.-Ing. (BA), 88175 Scheidegg (DE); Dorkel, André, Dipl.-Ing., 88161 Lindenberg (DE)
(74) Vertreter: Thoma, Michael

(56) Entgegenhaltungen:
- DE-A- 2 636 074
- DE-A- 2 739 252
- DE-A- 19 831 472
- DE-C- 4 308 630
- US-A- 6 041 615

## Beschreibung

Die Erfindung betrifft ein Klimatisierungssystem für Fahrzeuge, wie schienengebundene Fahrzeuge, Busse oder Lastkraftwagen, oder Flugzeuge nach dem Oberbegriff des Anspruchs 1.

Neben den bei Schienenfahrzeugen üblicherweise verwendeten Kaltdampfklimaanlagen ist bereits der Einsatz von Luft als Kältemittel in Klimaanlagen vorgeschlagen worden. Die luftgestützte Klimaanlage für Fahrzeuge wurde auf Basis bewährter Systemerfahrungen aus der Luftfahrt entwickelt.

Ein aus der DE-43 08 630 vorbekanntes Klimatisierungssystem, das bei schienengebundenen Fahrzeugen bereits eingesetzt wird, weist einen eine Heizung enthaltenden Zuluftkreislauf und einen Kühlkreislauf auf, die über einen Luft-Luft-Wärmetauscher gekoppelt sind. Im Kühlkreislauf wird Prozessluft in einer Entspannungsturbine expandiert und diese Prozessluft wird nach Durchströmen des Wärmetauschers zum Kühlen der Zuluft von einem Verdichter angesaugt, verdichtet und in die Umgebung abgegeben.

Wie bei der Klimatisierung von Räumen und Gebäuden ergibt sich auch bei Fahrzeugen, und insbesondere bei Schienenverkehrsfahrzeugen, sowie Flugzeugen, oft das Problem, mit einer Klimaanlage mehrere Räume mit unterschiedlichen Temperaturanforderungen zu bedienen. Ein klassischer Fall ist die Klimatisierung von Endwagen mit Fahrerstand bei Schienenverkehrsfahrzeugen. Betrachtet man ein solches Fahrzeug, so fordern die Spezifikationen zudem unterschiedliche Luftmengen. Bislang löste man dieses Problem dadurch, daß zwei unabhängige Klimaanlagen verwendet werden. Alternativ arbeitet man auch mit einem Klimagerät und regelt auf den Bereich mit der tieferen Temperaturanforderung. Der Bereich mit der höheren Temperaturanforderung muß dann entsprechend nachgeheizt werden. Beide Lösungen sind von den Betriebs- bzw. Erstkosten und der Energiebilanz her gesehen nachteilig.

Aufgabe der Erfindung ist es daher, ein gattungsgemäßes Klimatisierungssystem für Fahrzeuge derart weiterzubilden, daß mehrere Räume mit unterschiedlichen Temperaturanforderungen mit entsprechend konditionierter Luft bedient werden können.

Erfindungsgemäß wird diese Aufgabe bei einem gattungsgemäßen Klimatisierungssystem durch die Kombination der Merkmale gemäß Anspruch 1 gelöst. Demnach verzweigt sich der Lüftungskanal, der am Wärmetauscher zur Aufnahme der gekühlten Zuluft anschließt in zumindest zwei Kanäle. Zumindest einer der Kanäle wird mit Zuluft versorgt, die nahe dem Wärmetauscherauslaß entsprechend dem sich über die Bauhöhe des Wärmetauschers einstellenden Temperaturprofil der Zuluft aus einer der gewünschten Temperatur entsprechenden Zuluftschicht angesaugt wird.

Im Unterschied zu Wärmetauschern in Kaltdampfklimaanlagen, die ein homogenes gleiches Temperaturprofil am Wärmetauscher aufweisen, zeigt das Temperaturprofil an einem Luft-Luft-Wärmetauscher ein Temperaturgefälle, das sich die vorliegende Erfindung zunutze macht, indem man einen zweiten oder noch weitere unabhängige Räume mit zum ersten Raum unterschiedlichen Temperaturanforderungen klimatisiert. Vorteilhafte Ausgestaltungen der Erfindung ergeben sich aus dem sich an den Hauptanspruch anschließenden Unteransprüchen.

Demnach kann nahe dem Wärmetauscherausgang eine Ansaugeinrichtung angeordnet sein. Die Position der Ansaugeinrichtung kann über eine Verstelleinrichtung gezielt verstellt werden.

Besonders vorteilhaft läßt sich der Fahrerstand eines schienengebundenen Fahrzeugs unabhängig von dem Fahrgastraum klimatisieren.

Die Ansaugeinrichtung kann mit einem Ventilator verbunden sein, über den der Volumenstrom der angesaugten Luft einstellbar ist.

Schließlich kann eine Heizung zur wahlweisen Aufheizung der Zuluft für den Fall vorhanden sein, daß in dem getrennt zu klimatisierenden Raum eine Temperatur gewünscht wird, die über der Temperatur der wärmsten aus dem Wärmetauscher austretenden Zuluftschicht liegt.

Weitere Einzelheiten und Vorteile der Erfindung ergeben sich aus der nachfolgenden Beschreibung eines in der Zeichnung dargestellten Ausführungsbeispiels. Es zeigen:
- Fig. 1:: eine schematische Ansicht des Prinzips des Klimatisierungssystems,
- Fig. 2:: eine schematische Detailansicht einer Klimaanlage, die in dem Endwagen eines Schienenverkehrsfahrzeugs angeordnet ist, und
- Fig. 3:: eine schematische Ansicht einer bevorzugten Ausführungsform der vorliegenden Erfindung.

Die Erfindung wird beispielhaft für die Klimatisierung eines Schienenfahrzeuges diskutiert. Sie kann aber in gleicher Weise im Innenraum eines Flugzeuges, Busses, Lastkraftwagens oder anderen Verkehrsmittels eingesetzt werden.

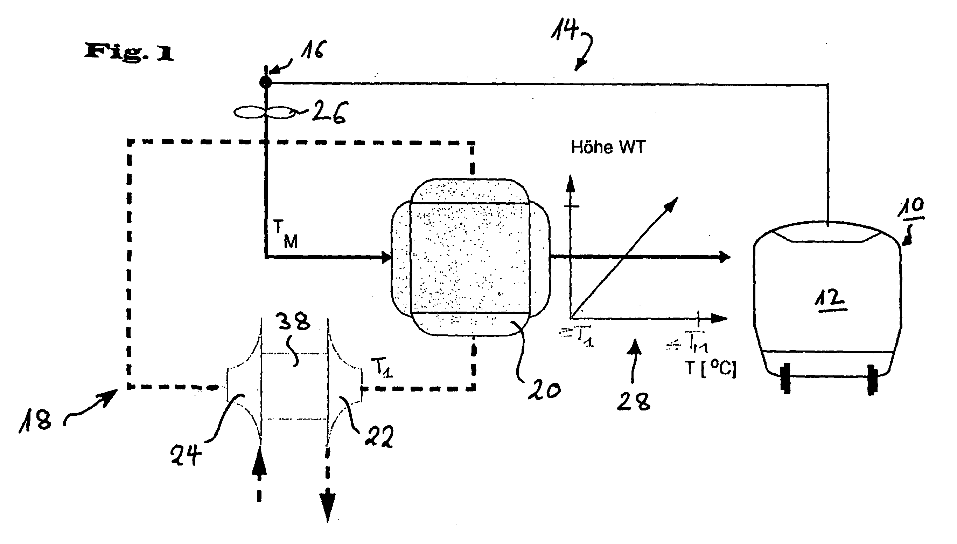

In Fig. 1 ist schematisch ein Schienenfahrzeug 10 dargestellt, dessen Fahrzeuginnenraum 12 über ein luftgestütztes Klimatisierungssystem 14 klimatisiert werden soll.

Das Klimatisierungssystem 14 ist hier schematisch dargestellt. Die Klimaanlage kann in einem kompakten Gehäuse in Form eines Moduls untergebracht werden und beispielsweise als Klimamodul im Deckenbereich des Schienenfahrzeugs 10 angeordnet werden.

Das Klimatisierungssystem kann, wie hier beispielhaft dargestellt, dem Funktionsprinzip des sogenannten "offenen Unterdruckprozesses" folgen. Bei diesem Prinzip ist ein Zufluftkreislauf 16 mit einem Kühlkreislauf 18 über einen Luft-Luft-Wärmetauscher 20 gekoppelt. Im Kühlkreislauf wird zumindest teilweise aus der Umgebung stammende Luft über eine Entspannungsturbine 22 expandiert und je nach Kühlanforderung stufenlos bis auf Temperaturen um 0°C abgekühlt. Im Wärmetauscher 20 wird dem Prozess aus dem Zuluftkreislauf abgegebene Wärme zugeführt. Die bei niederem Druck erwärmte Luft wird über einen Verdichter 24 angesaugt, verdichtet, und nach außen an die Umgebung wieder abgegeben.

Die Zuluft wird über mindestens einen Ventilator 26 aus der Umgebung angesaugt und über den Wärmetauscher 20 geführt und anschließend im Fahrgastraum gegebenenfalls über hier nicht näher dargestellte Lüfter zugeführt. Für den Heizbetrieb ist im Zuluftkreislauf eine hier nicht näher dargestellte Heizung angeordnet.

Zur Verringerung des Energieverbrauchs kann der Zuluft Umluft beigemischt werden.

Die Entspannungsturbine 22 und der Verdichter 24 sind zusammen mit einem Motor 38 auf einer Welle angeordnet und bilden die motorisierte aircycle-Maschine. Die gemeinsame Welle von Motor, Turbine und Verdichter ist in hier nicht näher dartgestellter Art und Weise in Magnetlagern gelagert. Die Magnetlagertechnologie zeichnet sich durch eine verschleiß- und wartungsfreie Lagerung der Welle aus.

In Fig. 1 ist durch ein entsprechendes Diagramm 28 die Wärmeschichtung über die Ausdehnung des Wärmetauschers 20 dargestellt. Im hier dargestellten Ausführungsbeispiel tritt die Kühlluft mit 0°C ein und verläßt den Wärmetauscher bei 20°C. Die abzukühlende Zuluft wird in dem Bereich des Luft-Luft-Wärmetauschers, in dem sie mit der kalten Prozessluft am Eingang der Prozessluft im Wärmetauscher zusammentrifft, vergleichsweise kühler sein, als am Ausgang der Prozessluft, wo diese beispielsweise 20°C aufweist. Dies wird durch die vereinfacht linear wiedergegebene Funktion im Diagramm 28, in welcher einerseits die Höhe des Wärmetauschers und andererseits die Temperatur aufgetragen ist, dargestellt.

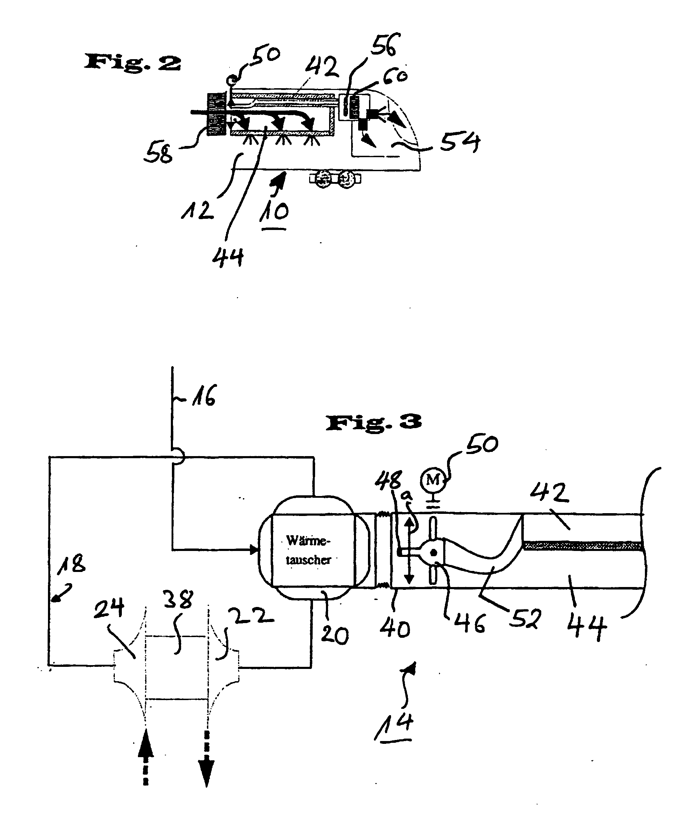

In Fig. 3 ist eine beispielhafte Umsetzung der vorliegenden Erfindung dargestellt. Hier schließt an den Ausgang des Wärmetauschers, aus dem die abgekühlte Zuluft austritt, über die gesamte Bauhöhe ein Lüftungskanal 40 an, der sich in zwei Kanäle 42 und 44 verzweigt. In dem Bereich des Lüftungskanals 40, der am Auslaß des Wärmetauschers 20 ansetzt, ist eine Ansaugeinrichtung 46 angeordnet, die mit ihrer Ansaugdüse 48 über eine Verstelleinrichtung 50 in Doppelpfeilrichtung a derart verstellbar ist, daß eine Temperaturschicht der entsprechend temperierten Zuluft angesaugt werden kann, die die gewünschte Temperatur zur Klimatisierung eines vom Hauptraum abgetrennten Raumes aufweist. Die Einstellvorrichtung ist über einen biegsamen Schlauch 52 mit dem Kanal 42 verbunden.

In Fig. 2 ist ein Anwendungsfall für das Klimatisierungssystem 14 dargestellt. Hier ist schematisch ein Teil eines Endwagens eines Schienenfahrzeuges 10 dargestellt, das neben dem Fahrgastraum 12 einen Fahrerstand 54 aufweist. Der Lüftungskanal ist verzweigt in einen Kanal 44, über den die Zuluft für den Fahrgastraum 12 zugeführt wird und einen Kanal 42, über den mittels eines Ansaugventilators 56 die für die Klimatisierung des Fahrerstands 54 benötigte Luft angesaugt wird. Über die Verstelleinrichtung 50 wird die in Fig. 2 nicht näher dargestellte Ansaugeinrichtung in die gewünschte Position verfahren. In Fig. 2 sind zusätzlich noch Heizungen 58 und 60 schematisch dargestellt, die für den Heizbetrieb des Klimatisierungssystems vorgesehen sind. Die Heizung 58 ist im Hauptzuluftstrom angeordnet und ermöglicht ein Aufheizen der gesamten Zuluft. Über die Heizung 60 kann unabhängig davon die Luft für den Fahrerstand 54 auf ein noch höheres Temperatumiveau aufgeheizt werden, soweit dies gewünscht ist.

## Patentansprüche

1. Klimatisierungssystem (21) für Fahrzeuge, vorzugsweise Schienenfahrzeuge, oder Flugzeuge mit einem eine Heizung enthaltenden Zuluftkreislauf und einem Kühlkreislauf, die über einen Luft-Luft-Wärmetauscher (20) gekoppelt sind, wobei im Kühlkreislauf Prozessluft in einer Entspannungsturbine (22) expandiert wird und wobei diese Prozessluft nach Durchströmen des Wärmetauschers zum Kühlen der Zuluft von einem Verdichter (24) angesaugt, verdichtet und in die Umgebung abgegeben wird und wobei am Wärmetauscher (20) ein Lüftungskanal zur Aufnahme der gekühlten Zuluft anschließt, der sich über die Bauhöhe des Wärmetauschers erstreckt,
**dadurch gekennzeichnet,**
**daß** der Lüftungskanal (40) sich in zumindest zwei Kanäle (42, 44) verzweigt, und daß mindestens einer der Kanäle mit Zuluft versorgt wird, die nahe dem Wärmetauscherauslaß entsprechend dem sich über die Bauhöhe des Wärmetauschers (20) einstellenden Temperaturprofil der Zuluft aus einer der gewünschten Temperatur entsprechenden Zuluftschicht angesaugt wird.

2. Klimatisierungssystem nach Anspruch 1, **dadurch gekennzeichnet, daß** die Luftansaugung über ein im Lüftungskanal nahe des Wärmetauscherauslasses beweglich angeordnete Ansaugeinrichtung erfolgt.

3. Klimatisierungssystem nach Anspruch 2, **dadurch gekennzeichnet, daß** die Lageverstellung der Ansaugeinrichtung über eine Verstelleinrichtung erfolgt.

4. Klimatisierungssystem nach einem der Ansprüche 1 bis 3, **dadurch gekennzeichnet, daß** die bei einer gewünschten Temperatur angesaugte Luft dem Fahrerstand des Endwagens eines Zuges zugeführt wird, während die restliche Luft dem Fahrgastraum zugeführt wird.

5. Klimatisierungssystem nach einem der Ansprüche 1 bis 4, **dadurch gekennzeichnet, daß** die über die Ansaugeinrichtung abgesaugte Luft über einen Ventilator angesaugt wird.

6. Klimatisierungssystem nach einem der Ansprüche 1 bis 5, **dadurch gekennzeichnet, daß** die über die Ansaugeinrichtung abgesaugte Luft über eine Heizung geführt wird.

## Claims

1. Air-conditioning system (14) for vehicles, preferably rail vehicles, or aircraft with a supply circuit which contains a heater with a cooling circuit, which circuits are coupled via an air-to-air heat exchanger (20), with process air being expanded in an expansion turbine (22) in the cooling circuit, and with this process air being induced after flowing through the heat exchanger in order to cool the input air from a compressor (24), being compressed and being emitted to the environment, and with a ventilation channel for holding the cooled input air being connected to the heat exchanger (20) and extending over the physical height of the heat exchanger,
**characterized**
**in that** the ventilation channel (40) branches into at least two channels (42, 44), and in that at least one of the channels is supplied with input air, which is induced close to the heat exchanger outlet, corresponding to the input air temperature profile that occurs over the physical height of the heat exchanger (20), from an input air layer which corresponds to the desired temperature.

2. Air-conditioning system according to Claim 1, **characterized in that** the air is induced by an induction device which is arranged in a moving manner in the ventilation channel, close to the heat exchanger outlet.

3. Air-conditioning system according to Claim 2, **characterized in that** the position of the induction device is adjusted by means of an adjustment device.

4. Air-conditioning system according to one of Claims 1 to 3, **characterized in that** the air which is induced at a desired temperature is supplied to the driver's cab in the end carriage of a train, while the rest of the air is supplied to the passenger compartment.

5. Air-conditioning system according to one of Claims 1 to 4, **characterized in that** the air which is sucked out via the induction device is induced via a fan.

6. Air-conditioning system according to one of Claims 1 to 5, **characterized in that** the air which is sucked out via the induction device is passed via a heater.

## Revendications

1. Système de conditionnement d'air (21) pour des véhicules, de préférence des véhicules sur rails, ou des avions avec un circuit d'arrivée d'air contenant un chauffage et un circuit de refroidissement, qui sont couplés au moyen d'un échangeur de chaleur air-air (20), de l'air de procédé étant détendu dans le circuit de refroidissement dans une turbine de détente (22) et cet air de procédé étant aspiré par un compresseur (24) après la traversée de l'échangeur de chaleur pour le refroidissement de l'air d'arrivée, comprimé et évacué dans l'environnement et un canal de ventilation pour la réception de l'air d'arrivée refroidi se raccordant à l'échangeur de chaleur (20), lequel canal s'étend sur la hauteur de construction de l'échangeur de chaleur, **caractérisé en ce que**
le canal de ventilation (40) se subdivise en au moins deux canaux (42, 44) et **en ce qu'**au moins l'un des canaux est alimenté en air d'arrivée, qui est aspiré à proximité de la sortie de l'échangeur de chaleur en fonction du profil de température se réglant sur la hauteur de construction de l'échangeur de chaleur (20) dans la couche d'arrivée d'air correspondant à la température souhaitée.

2. Système de conditionnement d'air selon la revendication 1, **caractérisé en ce que** l'aspiration d'air s'effectue au moyen d'un dispositif d'aspiration disposé de façon mobile dans le canal de ventilation à proximité de la sortie de l'échangeur de chaleur.

3. Système de conditionnement d'air selon la revendication 2, **caractérisé en ce que** le réglage de position de l'appareil d'aspiration s'effectue au moyen d'un appareil de réglage.

4. Système de conditionnement d'air selon l'une quelconque des revendications 1 à 3, **caractérisé en ce que** l'air aspiré à une température souhaitée est amené au poste de conduite de la voiture d'extrémité d'un train, alors que l'air résiduel est amené à l'habitacle passagers.

5. Système de conditionnement d'air selon l'une quelconque des revendications 1 à 4, **caractérisé en ce que** l'air évacué par le dispositif d'aspiration est aspiré au moyen d'un ventilateur.

6. Système de conditionnement d'air selon l'une quelconque des revendications 1 à 5, **caractérisé en ce que** l'air évacué au moyen du dispositif d'aspiration est guidé au moyen d'un chauffage.
